Europäisches Patentamt

European Patent Office

Office européen des brevets

(19)

(11) Veröffentlichungsnummer: **0 400 540**
**A2**

(12) **EUROPÄISCHE PATENTANMELDUNG**

(21) Anmeldenummer: **90110087.5**

(22) Anmeldetag: **28.05.90**

(51) Int. Cl.5: **G06K 7/015, G06K 7/10**

(30) Priorität: **31.05.89 DE 8906681 U**

(43) Veröffentlichungstag der Anmeldung:
**05.12.90 Patentblatt 90/49**

(84) Benannte Vertragsstaaten:
**AT BE CH DE DK ES FR GB IT LI NL SE**

(71) Anmelder: **CGK Computer Gesellschaft Konstanz mbH**
**Max-Stromeyer-Strasse 116**
**D-7750 Konstanz(DE)**

(72) Erfinder: **Klein, Gerhard, Dipl.-Ing. (FH)**
**Zur Breite 30**
**D-7753 Allensbach(DE)**
Erfinder: **Reisacher, Günter, Dipl.-Ing. (FH)**
**Felchengang 17**
**D-7750 Konstanz(DE)**

(74) Vertreter: **Fuchs, Franz-Josef, Dr.-Ing. et al**
**Postfach 22 13 17**
**D-8000 München 22(DE)**

(54) **Beleglesevorrichtung.**

(57) Die Vorrichtung enthält einen zeilenweise hin- und herbewegbaren Lesekopf, der auf einem angetriebenen Leseschlitten befestigt ist. Die Vorrichtung ist ferner gekennzeichnet durch einen über eine waagrechte Achse (14) quer zur Zeilenrichtung schwenkbaren Leseschlitten(2), durch ein mit dem Leseschlitten (2) starr gekoppeltes Führungselement (7), das in parallel zu den Lesezeilen verlaufenden Leitschienen (8, 15) geführt ist und durch weichenartig ausgebildete Schienenendbereiche derart, daß das in den Endbereich einer Leitschiene (8) einlaufende Führungselement (7) nach Richtungsumkehr des Lesekopfantriebes (3) in die benachbarte Leitschiene (15) geführt wird.

## Beleglesevorrichtung

Die Erfindung betrifft eine Beleglesevorrichtung gemäß den Merkmalen des Oberbegriffs des Anspruchs 1.

Eine der wichtigsten Voraussetzungen für die einwandfreie Funktion von Beleglesevorrichtungen ist die Exaktheit der Relativbewegung zwischen Lesekopf und Leseobjekt, und zwar sowohl bei feststehendem Lesekopf und bewegtem Objekt als auch umgekehrt, d.h. bei bewegtem Kopf und feststehendem Objekt. Im Gegensatz zu stationären Großanlagen, bei denen die Einhaltung dieser Forderungen relativ leicht garantiert werden kann, bereitet die exakte Führung bei kleineren, insbesondere Tischanlagen, wesentlich mehr Probleme, weil derartige Geräte auf Grund ihres meist geringen Gewichts und eines nicht ausreichend stabilen Standortes mechanische Erschütterungen erfahren, die sich auf die Lesequalität sehr negativ aufwirken.

Der vorliegenden Erfindung liegt die Aufgabe zugrunde, eine Beleglesevorrichtung der eingangs genannten Art in der Weise auszubilden, daß ein auf wenigstens zwei Zeilen einstellbarer Lesekopf in der jeweiligen Einstellung eindeutig geführt ist und die Umschaltung von Zeile zu Zeile schnell und einfach durchführbar ist.

Die Lösung dieser Aufgabe ergibt sich erfindungsgemäß durch die kennzeichnenden Merkmale des Anspruchs 1. Vorteilhafte Weiterbildungen der Erfindung sind in den Unteransprüchen angegeben.

Im folgenden wird ein Ausführungsbeispiel der Erfindung anhand der Zeichnung näher erläutert. Dabei zeigen

FIG 1 eine Beleglesevorrichtung gemäß der Erfindung in seitlicher Schnittdarstellung,

FIG 2 die Vorrichtung nach Figur 1, wobei der Lesekopf auf die nächst tiefere Zeile auf dem Beleg eingestellt ist,

FIG 3 die Vorrichtung nach Figuren 1 und 2 in der Ebene des den Beleg aufnehmenden Einsteckschlitzes.

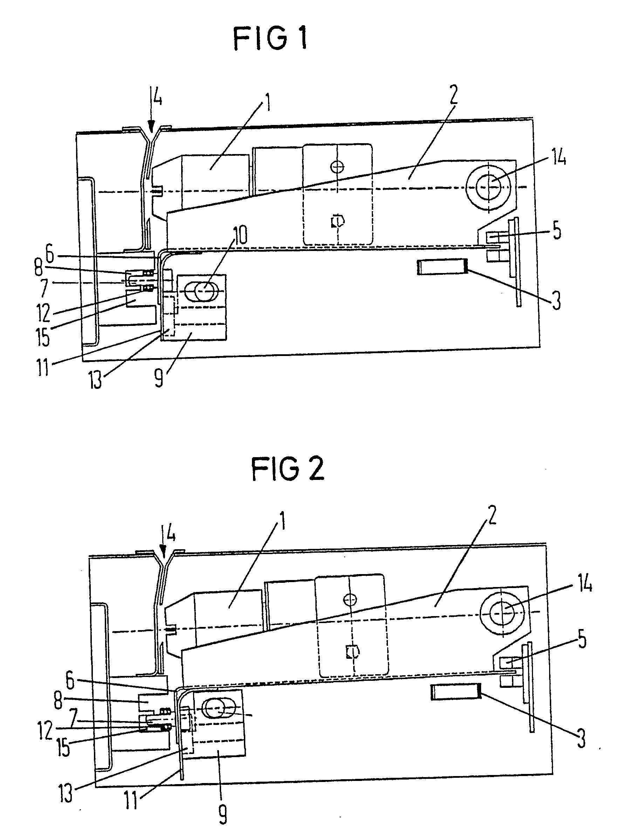

Die Figur 1 zeigt einen optischen Lesekopf 1, der auf einem Leseschlitten 2 befestigt ist. Dieser Leseschlitten 2 ist mittels eines Zahnriemenantriebs 3 senkrecht zur Zeichenebene hin- und herbewegbar, wobei der Lesekopf 1 parallel zu einem Einsteckschlitz 4 für ein Leseobjekt geführt wird. Der Antrieb des Leseschlittens wird in den beiden Endstellungen jeweils durch Lichtschranken 5 gesteuert. An der dem Einsteckschlitz 4 zugewandten Seite des Leseschlittens 2 ist ein etwa parallel zum Einsteckschlitz 4 verlaufender, zum Leseschlitten gehörender Winkel 6 vorgesehen, an dem ein Führungselement in Form eines senkrecht abstehenden Stahlstiftes 7, Zapfens oder dgl. befestigt ist. Dieser Stahlstift 7 ist zur exakten Führung des Lesekopfes 1 längs der Lesezeile in einer etwa U-förmigen Leitschiene 8 geführt. Auf der der Leitschiene 8 abgewandten Seite des Winkels 6 ist ein Gleitstück 9 vorgesehen, an dem sich der Winkel 6 abstützt. Als Halterung für das Gleitstück 9 dient eine parallel zum Leseschlitten 2 angeordnete Stange 10, die in einem Langloch des Gleitstücks 9 geführt ist. Zur Verbesserung einer möglichst geringen Reibung zwischen Leseschlitten 2 und Gleitstück 9 ist am Winkel 6 ein Stahlblech 11 mit sehr glatter Oberfläche befestigt. Zur weiteren Reduzierung der Reibung ist am Stahlstift 7 ein aufgepreßtes Kugellager 12 vorgesehen, das mit seiner Mantelfläche an einer verlängerten Innenschulter der Leitschiene 8 abrollt. Im Gleitstück 9 ist ein Haltemagnet 13 integriert, der so vertieft angeordnet ist, daß zwischen dem am Gleitstück 9 anliegenden Stahlblech 11 und dem Haltemagnet 13 ein geringer Spalt von ca. 0,1 mm Breite entsteht. Auf diese Weise wird der Leseschlitten 2 einerseits erschütterungsfrei gehalten, andererseits sind die Haltekraft des Magneten 13 und die Reibung zwischen Stahlblech 11 und dem aus Kunststoff bestehenden Gleitstück 9 so bemessen, daß der Leseschlitten 2 noch gegen die Kraft des Haltemagneten 13 geräuscharm und reibschlüssig bewegt werden kann. In der Figur 1 ist der Lesekopf 1 auf die obere Zeile eines im Einsteckschlitz 4 geführten Beleges bzw. Ausweises eingestellt. Da der den Lesekopf 1 tragende Leseschlitten 2 auf einer waagrechten Schwenkachse 14 in vertikaler Richtung schwenkbar gelagert ist, besteht die Möglichkeit, den Lesekopf 1 auf wenigstens eine weitere Zeile auf dem Ausweis einzustellen.

Die FIG 2 zeigt die Anordnung in einer gegenüber FIG 1 um eine Lesezeile nach unten versetzten Stellung des Lesekopfes 1. Der Leseschlitten 2 wird dabei in einer seitlichen Endstellung um die Schwenkachse 14 so weit nach unten geschwenkt, daß der Stahlstift 7 in eine unterhalb der Leitschiene 8 verlaufende weitere Leitschiene 15 eintaucht. Die beiden Leitschienen 8, 15 können dabei zweckmäßig als einstückige Doppelschiene ausgebildet werden. Durch die nach unten gerichtete Schwenkbewegung des Leseschlittens 2 ergibt sich eine geringe Relativbewegung des Winkels 6 bzw. des Stahlblechs 11 gegenüber dem Gleitstück 9 und gleichzeitig eine Relativbewegung zwischen dem Gleitstück 9 und der im Langloch geführten und demzufolge als Loslager wirkenden Stange 10.

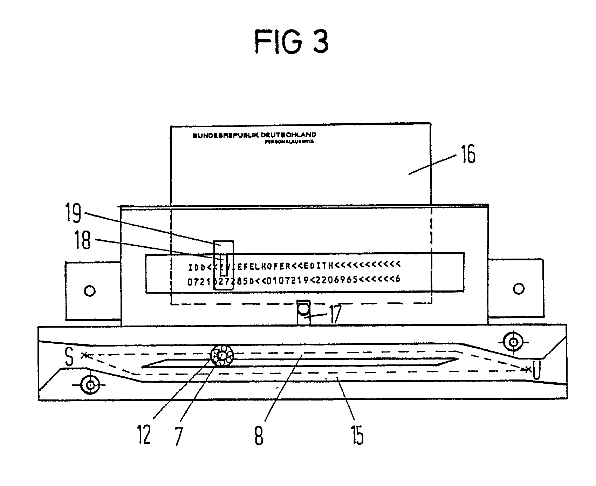

Der mehrzeilige Lesevorgang wird im folgenden anhand der FIG 3 näher erläutert. Diese FIG 3 zeigt die Lesevorrichtung in schematischer Darstellung im Bereich des Einsteckschlitzes 4 mit einem von oben eingesteckten kartenförmigen Ausweis, beispielsweise einem maschinenlesbaren Personalausweis. Die korrekte Lage des Ausweises 16 wird durch einen im Einsteckschlitz vorgesehenen Schalter, beispielsweise durch eine Lichtschranke 17, festgelegt. Der auf die obere Lesezeile ausgerichtete Lesekopf ist durch das kleinere rechteckige Lesefenster 18 und durch das etwas größere Beleuchtungsfenster 19 symbolisch angedeutet. Am Beginn des Lesevorgangs befindet sich der Lesekopf am linken Rand der Vorrichtung, und zwar oberhalb der mit S markierten Startposition, an der sich der mit dem Leseschlitten 2 über den Winkel 6 verbundene Stahlstift 7 (siehe FIG 1) befindet. Aus dieser Startposition S bewegt sich nun der Leseschlitten 2 nach rechts, wobei der Stahlstift 7 bzw. das auf den Stahlstift 7 aufgepreßte Kugellager 12 in der Leitschiene 8 geführt wird. Im Endbereich der Leitschiene 8 ist ein weichenartiges Umkehrelement vorgesehen, das derart ausgebildet ist, daß der Stahlstift 7 in die Ebene der darunter verlaufenden zweiten Leitschiene 15 abgedrängt wird. Im Umkehrbereich U wird die Richtung des Leseschlittenantriebs, gesteuert durch die Lichtschranke 5, umgedreht, so daß nun der Leseschlitten 2 von rechts nach links zurückbewegt wird. Dabei gleitet der Stahlstift 7 in die untere Leitschiene 15 mit der Folge, daß der Lesekopf auf die untere Lesezeile eingestellt wird. Am linken Rand der Leitschiene 15 wird der Stahlstift 7 wieder in die Ebene der oberen Leitschiene 8 abgedrängt und erreicht schließlich wieder die ursprüngliche Startposition S. Der zweizeilige Lesevorgang ist damit abgeschlossen. Durch zusätzliche Leitschienen mit entsprechend geformten Umlenkbereichen kann die Vorrichtung auch für einen mehr als zweizeiligen Lesebetrieb konzipiert werden. Die exakte Führung des Stahlstiftes 7 in den Leitschienen 8, 15 garantiert auf Grund der Tatsache, daß der Stahlstift 7 fest mit dem Leseschlitten 2 verbunden ist, eine ebenso exakte Führung des Lesekopfes entlang der Zeilen, so daß die für eine gute Lesequalität möglichst optimale Leseposition auch bei mechanischen Erschütterungen erhalten bleibt. Die Verwendung je einer Leitschiene pro Lesezeile und die besondere Formgebung der Schienenendbereiche ermöglichen nicht nur eine exakte Zeilenführung, sondern auch eine einfache Zeilenumschaltung unter Vermeidung mechanisch zu schaltender Weichen.

## Ansprüche

1. Beleglesevorrichtung mit einer Lesestation, in der der stillstehende Beleg von einem zeilenweise hin- und herbewegbaren Lesekopf abtastbar ist, wobei der Lesekopf auf einem angetriebenen Leseschlitten befestigt und derart schwenkbar gelagert ist, daß er auf jeweils eine von wenigstens zwei Zeilen auf dem Beleg einstellbar ist, **gekennzeichnet durch** einen über eine waagrechte Achse (14) quer zur Zeilenrichtung schwenkbaren Leseschlitten (2), durch ein mit dem Leseschlitten (2) starr gekoppeltes Führungselement (7), das in parallel zu den Lesezeilen verlaufenden Leitschienen (8, 15) geführt ist und durch weichenartig ausgebildete Schienenendbereiche derart, daß das in den Endbereich einer Leitschiene (8) einlaufende Führungselement (7) nach Richtungsumkehr des Lesekopfantriebes (3) in die benachbarte Leitschiene (15) geführt wird.

2. Beleglesevorrichtung nach Anspruch 1, **dadurch gekennzeichnet,** daß das Führungselement (7) an einem am Leseschlitten (2) vorgesehenen Winkel (6) befestigt ist.

3. Beleglesevorrichtung nach Anspruch 2, **dadurch gekennzeichnet,** daß an der Innenseite des Anschlagwinkels (6) eine aus Kunststoff bestehendes Gleitstück (9) vorgesehen ist, an dem sich der Anschlagwinkel (6) federnd abstützt.

4. Beleglesevorrichtung nach Anspruch 3, **dadurch gekennzeichnet,** daß im Gleitstück (9) ein Haltemagnet (13) eingebettet ist.

5. Beleglesevorrichtung nach einem der Ansprüche 2 bis 4, **dadurch gekennzeichnet,** daß das Führungselement als ein an der Außenseite des Winkels (6) vorgesehener Stift, Zapfen oder dgl. (7) ausgebildet ist.

6. Beleglesevorrichtung nach Anspruch 5, **dadurch gekennzeichnet,** daß auf dem Stift, Zapfen oder dgl. (7) ein auf den Leitschienen (8, 15) abrollendes Kugellager (12) befestigt ist.

7. Beleglesevorrichtung nach einem der vorhergehenden Ansprüche, **dadurch gekennzeichnet,** daß die Antriebsvorrichtung für den Leseschlitten (2) aus einem bidirektionalen Zahnriemenantrieb (3) besteht.

8. Beleglesevorrichtung nach Anspruch 7, **dadurch gekennzeichnet,** daß die Antriebsvorrichtung durch Lichtschranken (5) gesteuert ist.

EP 0 400 540 A2

# FIG 1

# FIG 2

# FIG 3

BUNDESREPUBLIK DEUTSCHLAND
PERSONALAUSWEIS

16

19

18

IDD<<EM EFELHOFER<<EDITH<<<<<<<<<<<
0721027285D<<0107219<2206965<<<<<<6

17

S

12  7          8       15